# EUROPEAN PATENT APPLICATION

(11) **EP 1 547 768 A1**
(43) Date of publication of application: **29.06.2005**
(21) Application number: 04258073.8
(22) Date of filing: 22.12.2004
(51) Int. Cl.: B32B 27/36, B32B 27/00

(54) **Method of improving the environmental stretch crack resistance of RPET without solid stating**

(30) Priority: 22.12.2003 US 745070
(71) Applicant: PepsiCo, Inc., Purchase, New York 10577 (US)
(72) Inventor: Farha, Said, Pleasantville New York 10570 (US); Tharmapuram, Sriram R., Stamford Connecticut 06902 (US)
(74) Representative: Garratt, Peter Douglas

(57) **Abstract**

Blends of non-solid stated RPET and an amount of PEN and/or NDC less than about 10 percent by weight are used as at least one layer of an article, such as a container or a preform for blow molding a container, having an inner layer of a thermoplastic material. The addition of the small amount of PEN and/or NDC allows the direct use of RPET without solid stating, and provides articles having environmental stretch crack resistance, color, and organoleptic properties comparable to that of virgin PET.

## Description

### BACKGROUND OF THE INVENTION

### Field of the Invention

The present invention is directed to articles formed directly from post-consumer, recycled, and/or regrind polyethylene terephthalate and to methods of making such articles. In one aspect, the present invention is directed to articles comprising a blend of post-consumer, recycled, and/or regrind polyethylene terephthalate and an amount of polyethyene naphthalate and/or naphthalene dicarboxylate of less than about 10 percent by weight of the blend in which the recycled and/or regrind polyethylene terephthalate is not solid stated under any substantial vacuum or an inert gas.

### Related Background Art

Polyethylene terephthalate ("PEP") is widely used in containers, such as beverage bottles. As a result, a substantial amount of regrind PET and recycled or post-consumer PET (collectively "RPET') is available, due, at least in part, to widespread recycling laws. RPET can be an economical substitute for the virgin material. RPET is primarily obtained from plastic beverage bottles processed in material recovery facilities. However, RPET may contain impurities, and has a relatively low intrinsic viscosity ("IV"). As a result, containers formed from RPET typically have inferior environmental stretch crack resistance ("ESCR"), organoleptics, and color. The IV of a resin also tends to vary as a result of the mixing materials produced by different manufacturers, which necessarily occurs during recycling. Untreated, low IV RPET is useful, for example, in fiberfill for clothing insulation and as fiber for carpeting. However, the low IV prevents its use in products that require a higher and/or a more homogenous IV.

The IV, organoleptics, and color of PET in general and RPET, in particular, can be improved by effecting a solid state polymerization of the polymer resin, i.e., by solid stating the PET or RPET, which increases the molecular weight and drives off undesirable impurities from the resin. For example, U.S. Patent No. 4,392,804 to Pushee et al. discloses heating PET, either under vacuum or in the presence of an inert gas, such as nitrogen, to increase the IV of low grade PET or RPET. The PET is heated in an isolated portion of an injection molding apparatus to a temperature of from about 172° to no more than 230°C to provide solid state polymerization of the PET, thereby providing an increased IV.

U.S. Patents Nos. 6,284,808 and 6,376,563 to Robinson disclose a process for the inline solid state polymerization of PET flakes in which RPET and PET materials are chopped into a heterogeneous mixture of flakes and chunks. The chunks are then removed in a destoner or sorter that removes a large portion of the chunk, which includes most of the amorphous, i.e., non-crystalline, neck portions from recycled bottles. The amorphous neck portions are reportedly not desirable in the process, as the rapid crystallization of the non-crystalline material releases a large amount of heat that interferes with the process. Only the crystalline PET and RPET flakes undergo solid state polymerization in the disclosed process.

U.S. Patent No. 5,886,058 to Van Erden et al. discloses that the solid state polymerization of RPET and PET occurs faster with flakes rather than pellets. As a result, the prior art step of pelletizing the PET is not required.

U.S. Patent No. 5,266,413 to Mills et al. discloses that solid stating decreases the acetaldehyde content of PET, and decreases the tendency of PET to form acetaldehyde. Without solid stating, a large amount of polyamides are reportedly required to reduce the level of acetaldehyde to an acceptable level, which adversely effects the clarity of the blend. Copolyester/polyamide blends having impact, stress crack, and heat resistance are reportedly obtained by blending noncrystalline PET with 0.06 to 2.0 weight percent of a nonhydroxy functional polyamide.

U.S. Patent No. 5,888,598 to Brewster et al. discloses preforms and containers formed from a blend of 0.1 to 95 weight percent PET and 5 to 99.9 weight percent polyethyene naphthalate ("PEN") copolymer, where the PEN contains 90 to 95 mole percent of naphthalene-dicarboxylate ("NDC") and 5 to 10 mole percent of a diacid, such as terephthalate. The use of the disclosed blends provides containers with barrier properties without the need for additional barrier layers. However, only single layer preforms and containers are disclosed, which precludes the use of RPET.

U.S. Patent Nos. 5,902,539, 6,194,536, 6,395,865, and 6,586,558 to Schmidt et al. disclose a process for making PEN/PET blends in which the rate of change of IV and level of transesterification are controlled during solid stating. The process is conducted under a flow of inert gas or a vacuum of as low as 2 torr. In the disclosed process, PEN having a first IV and PET or RPET having a second IV are reacted in the presence of an alkylene glycol compound, such as an ethylene glycol compound, in an amount sufficient to achieve a desired final IV. The blends contain from about 50 to about 90 weight percent PET and from about 50 to about 10 weight percent PEN.

U.S. Patent Nos. 6,109,006, 6,312,641, and 6,391,408 to Hutchinson and U.S. Patent No. 6,352,426 to Hutchinson et al. disclose methods of producing coated PET preforms using an overmolding process, such as an inject-over-inject ("IOI") method. In the disclosed IOI process, injection molding is used to inject one or more layers of material over an existing preform. The terms "overinjecting" and "overmolding" are used to describe a coating process in which a layer of material is injected over an existing preform, often while the underlying preform has not yet fully solidified. The disclosed over-injection is used to place one or more additional layers of materials, such as a barrier material, recycled PET, or other thermoplastic material over a coated or uncoated preform. However, there is no disclosure of using PEN or NDC to improve the ESCR and other properties of RPET without solid stating.

Prior art methods of using RPET require solid stating of the material, which increases the cost of any product made from the RPET. Therefore, a need exists for a method that allows the use of RPET in preforms, containers, and other articles without the need for solid stating, and for articles formed from non-solid stated RPET. The present invention provides such a method and articles.

### SUMMARY

The present invention is directed to articles comprising an inner layer of at least one thermoplastic material and at least one additional layer comprising non-solid stated RPET and an amount of PEN and/or naphthalene-dicarboxylate ("NDC") less than about 10 percent by weight, based on the weight of the blend of RPET and PEN and/or NDC. Preferably, the article is a container or a preform for blow molding a container, and, more preferably, the thermoplastic material in the inner layer is virgin PET. The article may further comprise at least one gas barrier layer positioned between the inner thermoplastic layer and the second layer or positioned outside the second layer. A particularly useful container or preform for blow molding a container in accordance with the invention comprises a molded inner layer comprising virgin PET, a second molded layer positioned around at least a portion of the inner layer, wherein the second layer comprises non-solid stated RPET and an amount of PEN and/or NDC of less than about 10 percent by weight, and, optionally, at least one gas barrier layer, where the gas barrier layer is preferably an epoxy-type or phenoxy-type material, and, most preferably, is a poly(hydroxyamino ether) ("PHAE").

The method of the invention comprises obtaining an inner thermoplastic layer of an article, such as a preform or container, obtaining a blend comprising non-solid stated RPET and PEN and/or NDC, wherein the PEN and/or NDC is present in an amount of less than about 10 percent by weight, forming at least one layer comprising the blend, and positioning the blend around at least a portion of the inner layer to form at least a portion of the article.

### BRIEF DESCRIPTION OF THE DRAWINGS

Fig. 1 illustrates a preform in accordance with the invention;
Fig. 2 illustrates a cross-section of the preform of Fig. 1;
Fig. 3 illustrates a cross-section of a multilayer preform of the invention;
Fig. 4 illustrates an inject-over-inject molding apparatus; and
Fig. 5 illustrates a lamellar injection molding apparatus.

### DETAILED DESCRIPTION OF THE INVENTION

As used herein, the term "solid stating" refers to a process of heating a polymer under vacuum or an atmosphere of an inert gas to effect polymerization in the solid state, such as the process disclosed in U.S. Patent No. 4,329,804 to Pushee et al., the teachings of which are incorporated herein by reference to the extent necessary to describe the solid stating process.

As used herein, the terms "non-solid stated RPET" and "non-solid stated RPET/PEN and/or NDC blend" refer to RPET and RPET/PEN and/or NDC blends that have not been heated under an atmosphere of inert gas or any substantial vacuum to solid state the RPET for any period of time sufficient to appreciably increase the average molecular weight and intrinsic viscosity ("IV") of the RPET or the RPET/PEN and/or NDC blend. As will be recognized by those of skill in the art, a minor amount of solid stating may occur during the normal drying that occurs during the molding of the RPET. However, as no appreciable increase in the average molecular weight or the IV occurs during a normal drying process, RPET that has such a minor amount of solid stating is considered non-solid stated RPET for the purpose of this disclosure.

The present invention is directed to articles comprising RPET that overcome the deficiencies of the prior art with regard to ESCR, organoleptics, and color without solid stating the RPET or a blend comprising RPET. As discussed above, flakes of RPET typically contain impurities and have a low IV. Therefore, the use of untreated RPET in containers, such as bottles and dispensing bags, and preforms for making such containers is unacceptable because of inferior ESCR, organoleptics, and color. Such problems were typically overcome in the prior art by solid stating the RPET to drive off volatiles and increase the molecular weight and IV of the RPET. However, solid stating adds a significant amount to the cost of a container. In contrast to the prior art, the present invention allows the direct use of non-solid stated RPET to provide articles, particularly containers and preforms, that have acceptable ESCR, organoleptic properties, and color. That is, the present invention provides thermoplastic articles comprising non-solid stated blends of RPET and PEN and/or NDC that have acceptable ESCR, organoleptic properties, and color that are comparable to those of virgin materials. In addition, the presence of PEN and/or NDC in the articles of the invention also increases the resistance to ultraviolet radiation ("UV") of the articles.

The non-solid stated blends of RPET and PEN and/or NDC useful in the invention comprise PEN and/or NDC in an amount of less than about 10 percent by weight. However, it has been found that a low level of PEN and/or NDC in a non-solid stated RPET/PEN and/or NDC blend provides the necessary level of ESCR required in containers for food and beverages, particularly those formed from preforms made using IOI techniques. Preferably, non-solid stated RPET/PEN and/or NDC blends comprise more than 90 percent by weight non-solid stated RPET and less than about 10 percent by weight PEN and/or NDC, more preferably, from about 90 to about 99.5 percent by weight non-solid stated RPET and from about 10 to about 0.5 percent by weight PEN and/or NDC, and, most preferably, from about 95 to about 99 percent by weight non-solid stated RPET and from about 5 to about 1 percent by weight PEN and/or NDC, based on the weight of the non-solid stated RPET/PEN and/or NDC blend.

The non-solid stated RPET/PEN and/or NDC blends of the invention may be formed with any method known in the art for making polymer blends, including, but not limited to, coextrusion, and may be used to form articles having an ESCR and color comparable to that of virgin PET. Such articles include, but are not limited to, containers, such as bottles and bags for dispensing fluids and fluid like powders, e.g., a bag-in-box, and preforms for making such containers.

For containers that are used for food and beverages and preforms used for making such containers, the issue of organoleptics is preferably overcome by first forming a layer of virgin PET or other acceptable FDA approved material, and then forming a layer of the non-solid stated RPET/PEN and/or NDC blend of the invention over the first layer. Additional layers comprising any of non-solid stated RPET/PEN and/or NDC blends, virgin PET, and active or passive gas barriers may also be applied by any means known in the art. Preferably, each layer is formed by injection molding using IOI techniques.

Preferred thermoplastic resins having the requisite low permeability to gases, such as oxygen and carbon dioxide, required for gas barrier layers in the present invention, include, but are not limited to, two types of resins, copolyesters of terephthalic acid, isophthalic acid, and at least one diol, such as those disclosed in U.S. Pat. No. 4,578,295 to Jabarin, and phenoxy-type thermoplastics, e.g., hydroxy-functional poly(amide-ethers), such as those described in U.S. Pat. Nos. 5,089,588 and 5,143,998, poly(hydroxy amide ethers), such as those described in U.S. Pat. No. 5,134,218, polyethers, such as those described in U.S. Pat. Nos. 5,115,075 and 5,218,075, hydroxy-functional polyethers, such as those as described in U.S. Pat. No. 5,164,472, hydroxy-functional poly(ether sulfonamides), such as those described in U.S. Pat. No. 5,149,768, poly(hydroxy ester ethers), such as those described in U.S. Pat No. 5,171,820, hydroxy-phenoxyether polymers, such as those described in U.S. Pat. No. 5,814,373, and poly(hydroxyamino ethers) ("PHAE"), such as those described in U.S. Pat. No. 5,275,853. The copolyester barrier materials described above may be referred to as "copolyester barrier materials". The other compounds described above are collectively categorized and referred to herein by the term "phenoxy-type thermoplastic" materials. All the patents referenced in this paragraph are incorporated herein by reference to the extent necessary to describe copolyester barrier materials and phenoxy-type thermoplastic materials.

Preferably, multilayer structures are formed using co-injection techniques known in the art or the inject-over-inject ("IOI") techniques disclosed in U.S. Patent No. 6,391,408 to Hutchinson, the contents of which are incorporated herein by reference to the extent necessary to describe IOI techniques and useful materials. Inject-over-inject is a procedure using injection molding to inject one or more layers of thermoplastic material over an existing injection-molded article. For example, using IOI to form a preform in accordance with the invention, the inner layer and the neck finish of the preform is first formed in a mold by injection molding an FDA approved material, such as virgin PET. The inner layer and neck finish are then removed from the mold, and, while still on the mold core, transferred to a second mold in which an outer layer of non-solid stated RPET and PEN and/or NDC is injected over the first layer. An outer layer of gas barrier material may then be applied using IOI or any other useful technique. Inject-over-inject may also be referred to as "overinjecting" and "overmolding." Preferably the outer layer or layers are overmolded while the inner layer is not yet fully solidified to facilitate bonding between the layers. As will be understood by those skilled in the art, the material used to form each layer molded onto a preform preferably has a glass transition temperature that is similar to that of the material used to form the preform, such that the layered preform does not crack, haze, or delaminate during blow molding.

A variation of inject-over-inject uses lamellar injection molding ("LIM") in which the melt stream comprises multiple thin layers of different materials. As disclosed in the Hutchinson '408 patent, LIM may be used in inject-over-inject as LIM-over-inject or inject-over-LIM. When desired, LIM-over-LIM may also be used to provide the layer of RPET and PEN and/or NDC and a gas barrier or other layer simultaneously.

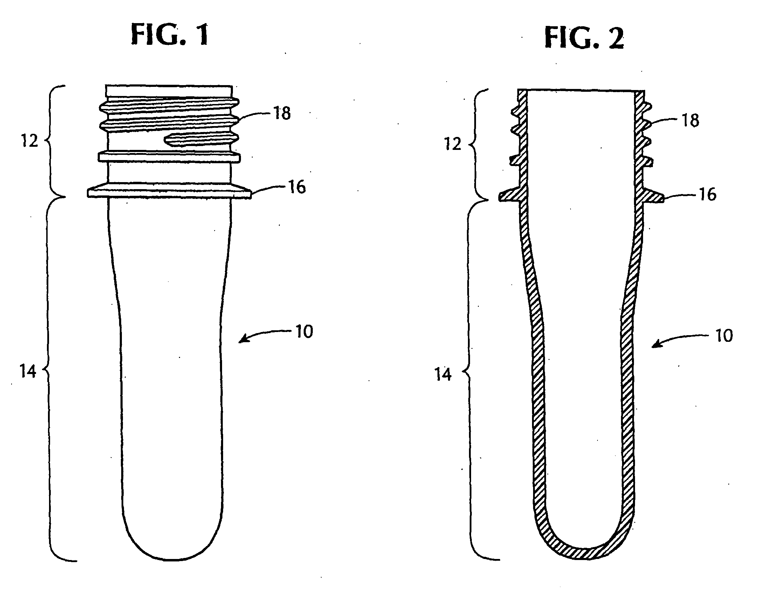

As noted above, the non-solid stated RPET/PEN and/or NDC blends of the invention are particularly useful in bottles, dispensing bags, and other containers, as well as preforms for forming such containers. Preforms and containers made with the non-solid stated RPET/PEN and/or NDC blends of the invention may be molded using any useful molding method known in the art that will provide a thermoplastic preform or container. Preferably, however, preforms are injection-molded. A preform 10 useful in the invention is illustrated in Fig. 1 and in cross-section in Fig. 2. The preform 10 comprises a finish or neck portion 12, a body or container portion 14, and a support ring 16, where the finish 12 and body 14 are preferably seamlessly joined. As illustrated, the finish 12 comprises threads 18, which, after blow molding of the container portion 14, may be used to seal the resulting container with a closure. However, configuration of the finish 12 is not limited to threads 18. Instead, any useful configuration that will allow sealing with a closure.

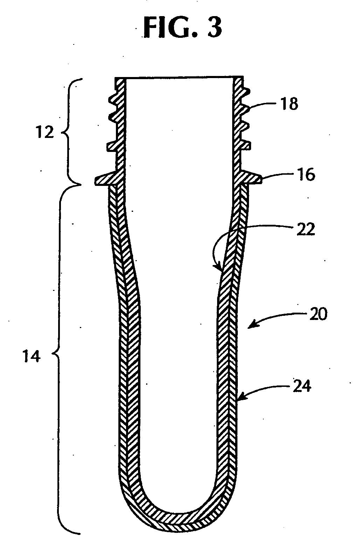

A cross-section of a multilayer preform 20 useful in the invention is illustrated in Fig. 3. As with the preform 10 illustrated in Figs. 1 and 2, the multilayer preform 20 comprises a seamlessly joined finish 12 and container portion 14 and a support ring 16. The container portion 14 comprises an inner layer 22, seamlessly joined to, and, preferably, molded in a single piece with the finish 12, and at least one outer layer 24. Preferably, the outer layer 24 is formed from a non-solid stated RPET/PEN and/or NDC blend of the invention, and the inner layer 22 is formed from virgin PET.

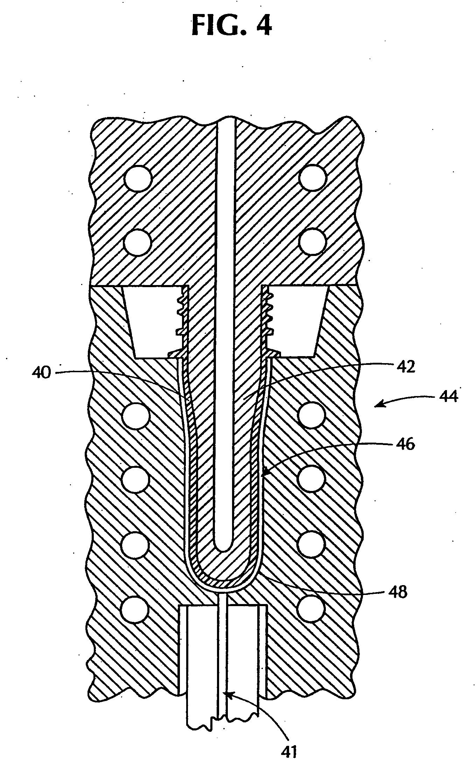

The outer layer 24 may be formed using any useful method known in the art. Preferably, the preform is molded using inject-over-inject, as illustrated in Fig. 4. Using the inject-over-inject process, a preform 40 is injection-molded on a core 42 in a first mold (not shown), where the core 42 and first mold are both preferably cooled. The preform 40 and core 42 are then transferred to a second cooled mold 44. At least one layer of thermoplastic resin is then injection-molded onto the outer surface 46 of the preform 40 in the gap 48 formed between the outer surface 46 and the second mold 44. After cooling, a multilayer preform of the type illustrated in Fig. 3 is obtained.

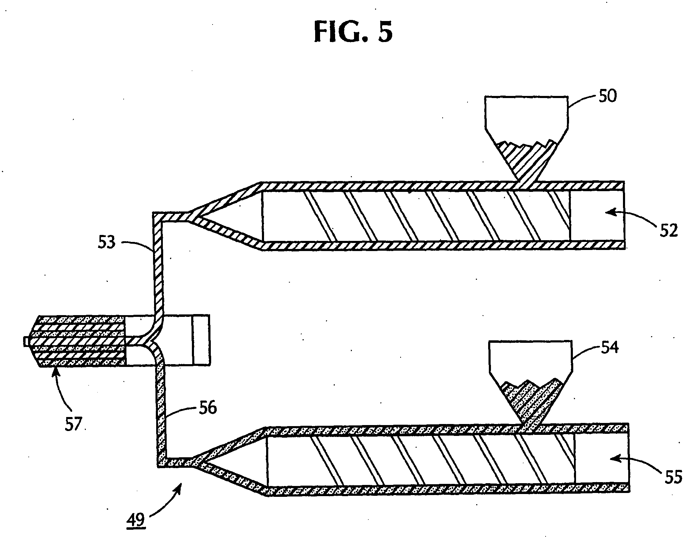

Such multilayer preforms may also be molded using a lamellar injection molding system that is useful for LIM-over-inject, inject-over-LIM, or LIM-over-LIM molding. A lamellar injection molding apparatus 49 is illustrated in Fig. 5. Although the apparatus 49 is suitable for LIM-over-inject, inject-over-LIM molding, and LIM-over-LIM molding, an entire preform may be made using a single LIM molding step. The apparatus 49 comprises a feed hopper 50, configured to supply a first thermoplastic resin, preferably PET, to a first injection cylinder 52, and a second feed hopper 54, configured to supply a second thermoplastic resin, such as a barrier material, to a second injection cylinder 55. The outputs 53 and 56, respectively, are combined in a layer generator 57 in the desired relative amounts, and used to form at least one portion of a preform (not shown).

Accordingly, it will be appreciated that the present invention has been described with references to particular preferred embodiments that are now contemplated. However, the invention is not limited by the embodiments disclosed herein, and it will be appreciated that numerous modifications and other embodiments may be devised by those skilled in the art. Therefore, it is intended that the appended claims cover all such modifications and embodiments that fall within the true scope of the present invention.

## Claims

1. A multi-layered article comprising:
an inner layer comprising a thermoplastic material; and
a second layer comprising non-solid stated RPET and PEN and/or
NDC, wherein the PEN and/or NDC is present in an amount of less than about 10 percent by weight of the second layer.

2. The article according to claim 1, wherein the article is a container or a preform for blow molding a container.

3. The article according to claim 1, wherein the thermoplastic material in the inner layer is virgin PET.

4. The article according to claim 1, wherein the RPET is present in at least one additional layer in an amount greater than 90 percent by weight.

5. The article according to claim 1, further comprising at least one barrier layer positioned between the inner thermoplastic layer and the second layer or positioned outside the second layer.

6. The article according to claim 5, wherein the barrier layer adheres to an outer surface of the inner layer.

7. The article according to claim 5, wherein the barrier layer comprises at least one of a thermoplastic epoxy-type, a phenoxy-type, and a poly(hydroxyamino ether) material.

8. The article according to claim 5, wherein the thermoplastic epoxy-type is a poly(hydroxyamino ether).

9. The article according to claim 1, wherein the PEN and/or NDC is present in the second layer in an amount of from about 0.001 to less than about 10 percent by weight of the second layer.

10. The article according to claim 1, wherein the PEN and/or NDC is present in an amount of from about 1 to about 4.5 percent by weight of the second layer.

11. The article according to claim 1, wherein the PEN and/or NDC is present in an amount of from about 3 to about 4 percent by weight of the second layer.

12. A method of forming a multilayer article, the method comprising:
obtaining an inner layer of the article;
obtaining a blend comprising non-solid stated RPET and PEN and/or NDC,
wherein the PEN and/or NDC is present in an amount of less than about 10 percent by weight of the blend;
forming at least one layer comprising the blend; and
positioning the blend around at least a portion of the inner layer to form at least a portion of the article.

13. The method according to claim 12, wherein the PEN and/or NDC is present in an amount of from about 0.5 to about 10 percent by weight of the blend.

14. The method according to claim 12, wherein the PEN and/or NDC is present in an amount of from about 1 to about 5 percent by weight of the blend.

15. The method according to claim 12, wherein the article is a container or a preform for forming a container.

16. The method according to claim 12, wherein the inner layer comprises virgin PET.

17. The method according to claim 12, wherein the inner layer is obtained by molding a thermoplastic material.

18. The method according to claim 12, wherein the inner layer is obtained by injection molding a thermoplastic material.

19. The method according to claim 12, wherein forming the layer comprising the blend comprises injection molding the blend around the inner layer.

20. The method according to claim 12, further comprising forming at least one layer comprising a gas barrier material between the inner thermoplastic layer and the second layer or outside the second layer.

21. The method according to claim 20, wherein the gas barrier material comprises at least one of a thermoplastic epoxy-type, a phenoxy-type, and a poly(hydroxyamino ether) material.

22. The method according to claim 21, wherein the gas barrier material is a poly(hydroxyamino ether) material.

23. A container or preform for blow molding a container, comprising:
a molded inner layer comprising virgin PET; and
a second molded layer positioned around at least a portion of the inner layer,
wherein the second layer comprises non-solid stated RPET and an amount of PEN and/or NDC of less than about 10 percent by weight of the second layer.

24. A method of making a container or a preform, comprising:
molding a first layer comprising virgin PET;
forming a blend comprising non-solid stated RPET and PEN and/or NDC,
wherein the PEN and/or NDC is present in an amount of less than about 10 percent by weight; and
molding at least one layer comprising the blend around at least a portion of the inner layer to form at least a portion of the container or preform.
